# EUROPEAN PATENT APPLICATION

(11) **EP 1 748 644 A2**
(43) Date of publication of application: **31.01.2007**
(21) Application number: 06117733.3
(22) Date of filing: 24.07.2006
(51) Int. Cl.: H04N 5/243

(54) **A gain control method for a camera to support multiple conflicting applications concurrently**

(30) Priority: 25.07.2005 US 702003 P
(71) Applicant: MobilEye Technologies, Ltd., 1034 Nicosia (CY)
(72) Inventor: Stein, Gideon, 96263, Jerusalem (IL); Wolfovitz, Uri, Israel (IL)
(74) Representative: van Westenbrugge, Andries

(57) **Abstract**

A gain control method for setting the gain control channels of a camera such that it enables the support of multiple conflicting applications which camera is performing concurrently, including using one channel, for example the Green channel, for B&W image applications, and the other two channels for color image applications or any other multiple application. The gain control method of the present invention is also applicable to color cameras and also to B&W cameras that have more than one gain control channel.

## Description

### RELATED APPLICATIONS

The present application claims the benefit under 35 USC 119(e) of US provisional application 60/702,003 filed on July 25th, 2005, the disclosure of which is incorporated herein by reference.

### FIELD OF THE INVENTION

The present invention relates, in general, to gain control methods for a camera, and in particular to methods for setting the gain control channels of a camera such that they enable the support of multiple conflicting applications which the camera is performing concurrently.

### BACKGROUND OF THE INVENTION AND PRIOR ART

In a typical camera the Automatic Gain Control (AGC) system has a single set of parameters, which is suitable for one application designated for said camera. In standard color cameras, for example, you might want 'nice' pictures with 'correct' color balance - 'white balance'.

However, there are systems employing color cameras, designated for concurrent multiple applications, each of which requires a different set of gain parameters. One solution is to use multiple cameras, which is of course more expensive and often more complex.

Another solution for image streams could be to alternate gain parameters and send each application the images captured using the corresponding gains. Of course, this will reduce the frame rate of the image stream to each application relative to the camera frame rate.

An example for a system employing a color camera for concurrent multiple applications is a driving assistance system for Lane Departure Warning (LDW) system and vehicle detection at night. When operating the LDW system at night, the camera is set with gain and exposure parameters, which gives a very non-linear response such that even dim lane markings can be seen and at the same time, not get blinded by oncoming vehicles headlights. For vehicle detection at night, which can be based on detecting oncoming vehicles headlights and leading vehicles taillights, we need a dimmer picture so that we can tell the difference between very bright light of the oncoming headlights and the somewhat dimmer light of host vehicle headlight reflections off traffic signs. If we use the redness characteristic of taillights as a feature, we also need to reduce the gain on the red channel so that it does not saturate on taillights.

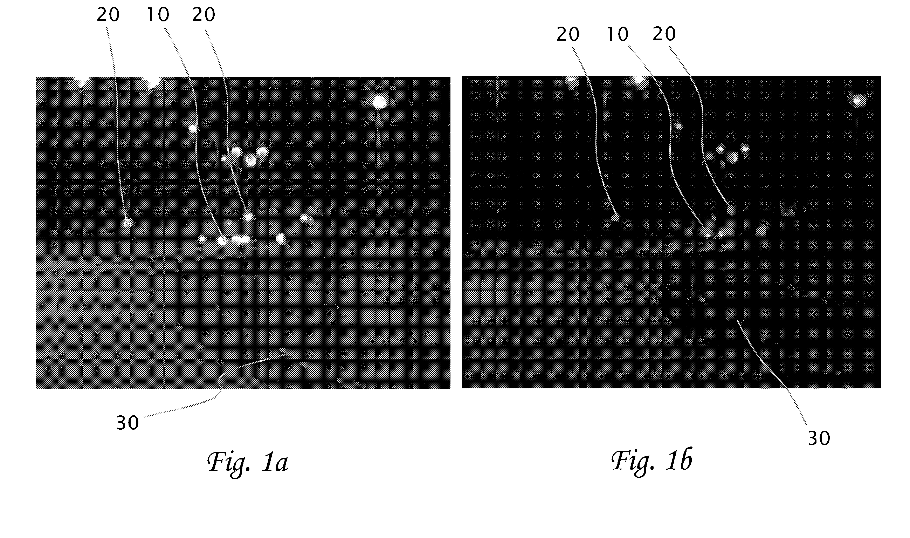

FIG. 1 a exemplifies the situation where the gain controls settings are such that the dim lane markings 30 can be seen quite well in the image, but then, very bright light such as of the oncoming headlights 10 and the host vehicle headlight reflections off traffic signs 20 are saturated in the image. FIG. 1 b exemplifies the situation where the gain controls settings are such that the dim lane markings 30 can be hardly be seen in the image, but then, very bright light such as of the oncoming headlights 10 and the host vehicle headlight reflections off traffic signs 20 are not saturated in the image.

One option would be to take images with different gain settings (e.g. lower), but then, in some of those images, lane information would be lost due to a too a low gain setting.

There is therefore a need for a method to set gain and exposure parameters of a color camera such that bright reflectance will not bring about saturation of the camera cells on the one hand and not lose dim reflectance on the other hand.

### SUMMARY OF THE INVENTION

It is thus the object of the present invention to support multiple conflicting applications including using one channel, for example the Green channel, for B&W image applications, and the other two channels for color image applications.

For example, the present invention provides methods to set gain and exposure parameters of a color camera such that bright reflectance will not bring about saturation of the camera cells on the one hand and not lose dim reflectance due to a too a low gain setting.

According to the teachings of the present invention there is provided a gain control method for a camera including (a) setting the response curve of one gain control channel, for example the Green channel, according to a first application type; and (b) setting the response curve of the other gain control channels, for example the Red and Blue channels, according to a second and other application types, for example color image applications. It is also possible to set the response curve of a second gain control channel, for example the Red channel, according to a second application type, and a third gain control channel, for example the Blue channel, according to a third application type.

Further objects and advantages will become apparent from a consideration of the ensuing description and drawings.

### BRIEF DESCRIPTION OF THE DRAWINGS

The present invention will become fully understood from the detailed description given herein below and the accompanying drawings, which are given by way of illustration and example only and thus not limitative of the present invention.
FIG. 1 a depicts an 8-10 bit CMOS camera image which gives saturated pixels on traffic signs as well as light sources. But then, lane markings are quite visible.
FIG. 1 b depicts an 8-10 bit CMOS camera image with a lower gain control setting, which gives an image where one can differentiate between light sources and reflections from distant traffic signs. But then, lane markings are hardly visible.
FIG. 2 is a schematic illustration of a block diagram of a color camera as used in prior art.
FIG. 3 is a schematic illustration of a block diagram of a color camera as used according to an embodiment of the present invention.
FIG. 4 is a schematic illustration of a block diagram of a color camera as used according to another embodiment of the present invention.

### DESCRIPTION OF THE PREFERRED EMBODIMENTS

Before explaining embodiments of the invention in detail, it is to be understood that the invention is not limited in its application to the details of construction and the arrangement of the components set forth in the following description or illustrated in the drawings.

Unless otherwise defined, all technical and scientific terms used herein have the same meaning as commonly understood by one of ordinary skill in the art to which this invention belongs. The materials, methods, and examples provided herein are illustrative only and not intended to be limiting.

A standard color CMOS imager chip uses a Bayer pattern of Red (R), Green (G) and Blue (B) filters (based on U.S. patent No. 3,971,065, given to Bryce E. Bayer from the Eastman Kodak Company). An example of such a camera is the National Semiconductor LM9628 Color High Dynamic Range CMOS image sensor VGA 30 FPS).

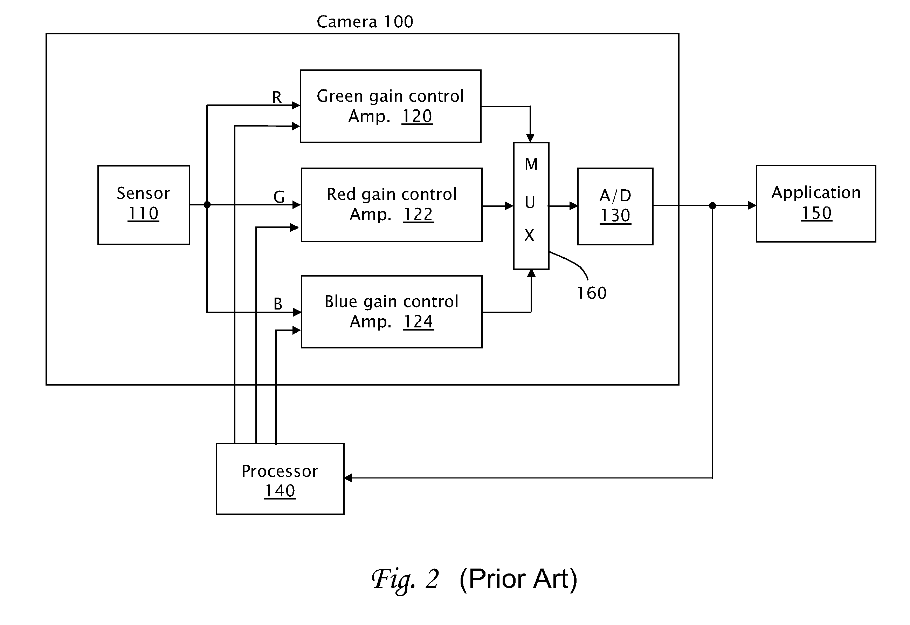

Such a camera 100 main components is exemplified in the block diagram of FIG. 2. It has a sensor 110 and different gain control 120, 122 and 124 for each respective RGB pixel group. These different gains are used for getting the colors right and for "white balance" control. In a CCD camera these gains are off chip but essentially it is similar. The pixels are then streamed by multiplexer 160 into A/D converter 130 and on to the external application 150. Feedback from the A/D 130 is fed back to a processor 140 which controls the different gain control 120, 122 and 124. Often, B&W camera sensors have identical electronic, for example: the National Semiconductor LM961 8 CMOS B&W image sensor.

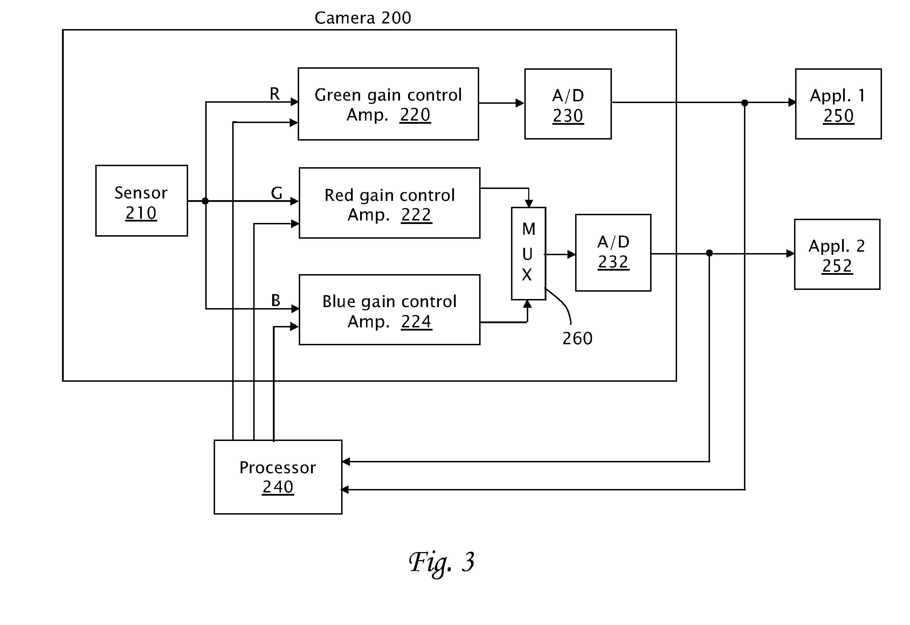

According to a method of the present invention the different channel gains are used to support the different applications. An example of such a method is schematically illustrated in FIG. 3, which shows a block diagram of a color camera 200 as used according to an embodiment of the present invention. In this example, the gain 220 of the green channel can be used to support a first application 250, for example an LDW application, and for detecting bright spots for vehicle detection application. For a second application 252, the gains 222 and 224 of R and B respectively are then adjusted, for example, to support the finer features of vehicle detection application such as detecting redness, for example of the red taillights using a color sensor. Processor 240 which controls the different gain control 220, 222 and 224 as required by each application.

It is important to note that for a Black and White (B&W) algorithm such as white lane markings detection, there is no advantage of using a color sensor over using just the green channel, and thus using the R and B channels for a color application is a total win.

It should also be noted that the present invention describes the use of a color sensor by way of example. However sometimes all the applications can be B&W. In those cases, the multiple-gain concept can also be applied using B&W sensors with multiple gain channels such as the LM961 8 mentioned above.

It should also be noted that the method according to the present invention can be also applied to B&W sensors comprising more that one gain control channel.

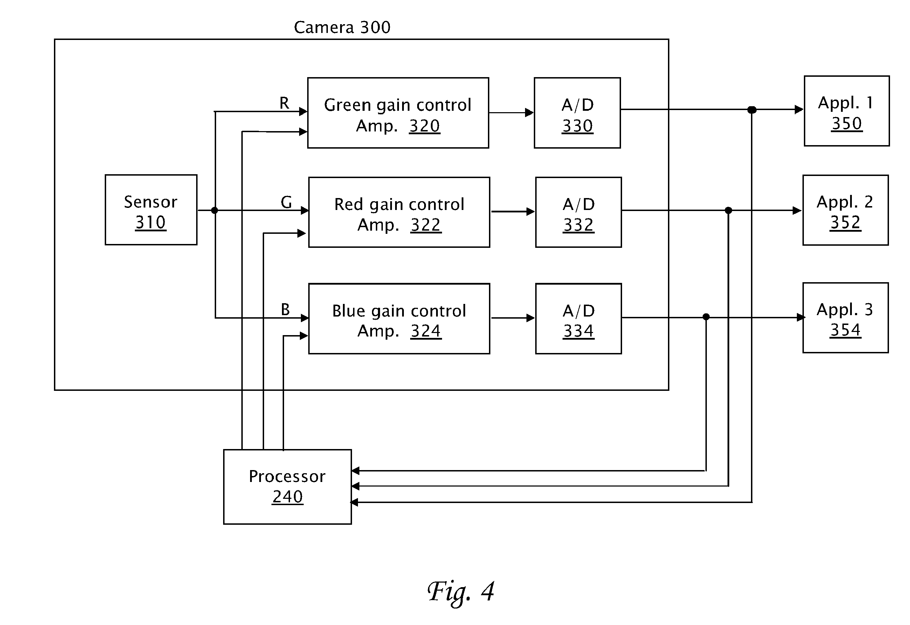

According to another method of the present invention the different channel gains are used to support the different applications. An example of such a method is schematically illustrated in FIG. 4, which shows a block diagram of a color camera 300 as used according to an embodiment of the present invention. In this example, the gain 320 of the green channel can be used to support a first application 350, for example an LDW application. For a second application 352, the gain 322 B is adjusted, for example, to detect bright spots such as of headlights of oncoming vehicles. For a third application 354, the gain 324 of R is adjusted, for example, to support vehicle detection application such as detecting redness, for example of the red taillights of a leading vehicle, using a color sensor. Processor 340 which controls the different gain control 320, 322 and 324 as required by each application.

The invention being thus described in terms of several examples and embodiments, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A gain control method for a camera used to image an automotive environment, which camera comprises more than one gain control channel, the method including:
(a) setting gain of a first gain control channel, responsive to a first imaging application type; and
(b) setting gain of a second gain control channel responsive to a second imaging application type.

2. The gain control method of claim 1, wherein at least one of said applications type is a B&W image application.

3. The gain control method of claims 1 and 2, wherein at least one of said applications type is a color image application, for example, redness detection applications, blueness detection applications and/or greenness detection applications or and combination therein.

4. The gain control method of claim 1, wherein said camera is a color camera.

5. The gain control method of claim 1, wherein said camera is a B&W camera.

6. A gain control method for a camera, which camera comprises at least three different gain control channels, including:
(a) setting gain of a first gain control channel according to a first application type;
(b) setting gain of a second gain control channel according to a second application type; and
(c) setting gain of a third gain control channel according to a third application type.

7. The gain control method of claim 6, wherein at least one of said applications type is a B&W image application.

8. The gain control method of claims 6 and 7, wherein at least one of said applications type is a color image application, for example, redness detection applications, blueness detection applications and/or greenness detection applications or and combination therein.

9. The gain control method of claim 6, wherein said camera is a color camera.

10. The gain control method of claim 6, wherein said camera is a B&W camera.

11. A method of controlling a camera used to image a roadway environment, the camera having a plurality of gain channels and the method comprising:
setting gain of a first channel of the plurality of channels to emphasize a first at least one feature typical of a roadway environment in an image of the roadway environment; and
setting gain of a second channel of the plurality of channels to emphasize a second at least one feature typical of a roadway environment that is different from the first at least one feature in an image of the roadway environment.
